# EUROPEAN PATENT APPLICATION

(11) **EP 3 968 412 A1**
(43) Date of publication of application: **16.03.2022**
(21) Application number: 21772128.1
(22) Date of filing: 04.03.2021
(51) Int. Cl.: H01M 4/38, H01M 4/40, H01M 10/39, H01M 10/44, H01M 10/615

(54) **SODIUM-SULFUR BATTERY CONTROL DEVICE AND SODIUM-SULFUR BATTERY CONTROL METHOD**

(30) Priority: 18.03.2020 JP 2020047295
(71) Applicant: NGK Insulators, Ltd., Nagoya-shi, Aichi 467-8530 (JP)
(72) Inventor: FUKUHARA Motohiro, Nagoya-shi, Aichi 467-8530 (JP)
(74) Representative: Mewburn Ellis LLP
(86) International application number: PCT/JP2021/008340
(87) International publication number: WO 2021/187125

(57) **Abstract**

A sodium-sulfur battery is used for a longer period than a lifetime thereof. The sodium-sulfur battery includes a negative electrode active material and a positive electrode active material. The negative electrode active material includes sodium. The positive electrode active material includes sulfur and sodium polysulfide. An apparatus for controlling the sodium-sulfur battery includes a charge and discharge controller and a temperature controller. The charge and discharge controller controls charge and discharge of the sodium-sulfur battery. The temperature controller maintains the sodium-sulfur battery at a first temperature at which sodium, sulfur, and sodium polysulfide are liquefied in an operation period during which the charge and discharge controller causes the sodium-sulfur battery to be charged and discharged, and maintains the sodium-sulfur battery at a second temperature at which sodium and sulfur are liquefied and sodium polysulfide is solidified in a non-operation period during which the charge and discharge controller causes the sodium-sulfur battery not to be charged and discharged.

## Description

### Technical Field

The present invention relates to apparatuses for controlling sodium-sulfur batteries and methods for controlling the sodium-sulfur batteries.

### Background Art

A sodium-sulfur battery includes a negative electrode active material and a positive electrode active material. The negative electrode active material includes sodium. The positive electrode active material includes sulfur and sodium polysulfide.

When charged and discharged, the sodium-sulfur battery is heated to approximately 320 °C at which sodium as the negative electrode active material and sulfur and sodium polysulfide as the positive electrode active material are liquefied. Sulfur and sodium polysulfide activated at a high temperature are corrosive. In particular, liquefied sodium polysulfide is highly corrosive. The sodium-sulfur battery thus has a lifetime on the order of only 15 years in many cases. For example, Patent Document 1 discloses that a sodium-sulfur cell has a lifetime on the order of 15 years (paragraph 0005).

In some applications of the sodium-sulfur battery, the sodium-sulfur battery is desired to be used for a longer period than the lifetime thereof.

### Prior Art Document

### Patent Document

Patent Document 1: Japanese Patent Application Laid-Open No. 2003-151620 Summary

The present invention has been conceived in view of the problem. It is an object of the present invention to enable use of a sodium-sulfur battery for a longer period than an expected lifetime.

The present invention relates to an apparatus for controlling the sodium-sulfur battery.

The sodium-sulfur battery includes a negative electrode active material and a positive electrode active material. The negative electrode active material includes sodium. The positive electrode active material includes sulfur and sodium polysulfide.

The apparatus for controlling the sodium-sulfur battery includes a charge and discharge controller and a temperature controller. The charge and discharge controller controls charge and discharge of the sodium-sulfur battery. The temperature controller maintains the sodium-sulfur battery at a first temperature at which sodium, sulfur, and sodium polysulfide are liquefied in an operation period during which the charge and discharge controller causes the sodium-sulfur battery to be charged and discharged, and maintains the sodium-sulfur battery at a second temperature at which sodium and sulfur are liquefied and sodium polysulfide is solidified in a non-operation period during which the charge and discharge controller causes the sodium-sulfur battery not to be charged and discharged.

The present invention also relates to a method for controlling the sodium-sulfur battery.

According to the present invention, in the non-operation period during which the sodium-sulfur battery is not charged and discharged, sodium polysulfide activated at a high temperature to be highly corrosive is solidified while a liquefied state of sodium included in the negative electrode active material is maintained. Furthermore, by decreasing the temperature of the sodium-sulfur battery to the temperature at which sodium polysulfide is solidified, activation of an active material at a high temperature can be suppressed, and degeneration of a container, a sealer, and the like of the sodium-sulfur battery caused by the active material activated at the high temperature can be suppressed. Deterioration of the sodium-sulfur battery during the non-operation period can thereby be suppressed, and the sodium-sulfur battery can be used for a longer period than an expected lifetime.

The objects, features, aspects, and advantages of the present invention will become more apparent from the following detailed description and the accompanying drawings.

### Brief Description of Drawings

FIG. 1 is a block diagram schematically showing a power storage facility 1.
FIG. 2 is a circuit diagram schematically showing an assembled battery of the power storage facility 1.
FIG. 3 is a graph showing an example of a change over time in temperature of a sodium-sulfur battery of the power storage facility 1 within a calendar year.

### Description of Embodiments

### 1 Power Storage Facility

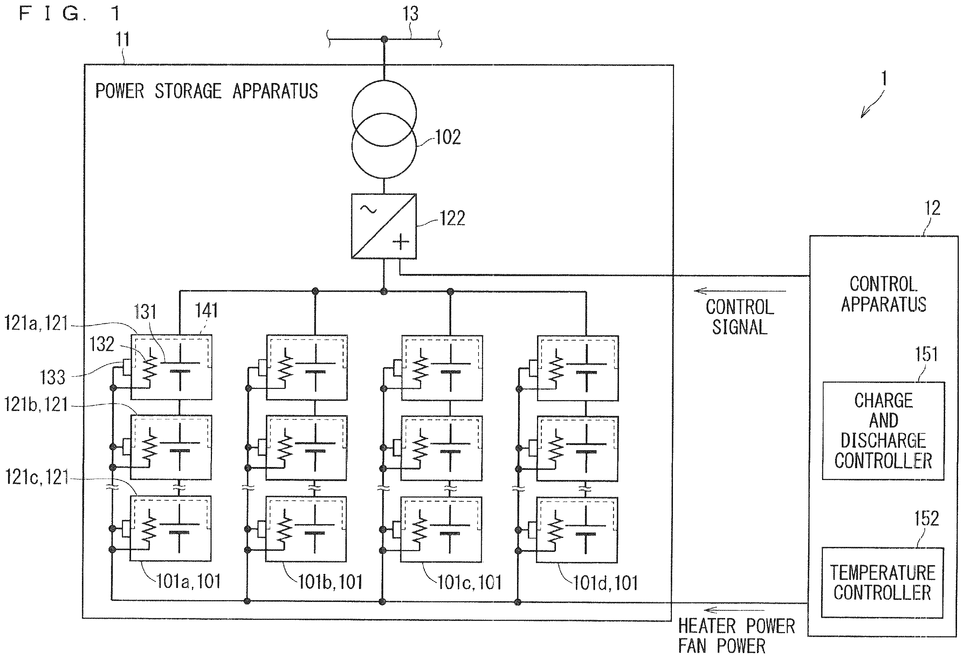

FIG. 1 is a block diagram schematically showing a power storage facility 1 in an embodiment of the present invention.

The power storage facility 1 shown in FIG. 1 includes a power storage apparatus 11 and a control apparatus 12.

The power storage apparatus 11 is linked to a system 13, and inputs and outputs AC power into and from the system 13 through a power conversion system (PCS) 122. The control apparatus 12 controls the power storage apparatus 11.

### 2 Power Storage Apparatus

As shown in FIG. 1, the power storage facility 1 includes four module battery strings 101 (101a, 101b, 101c, and 101d), the power conversion system (PCS) 122, and a transformer 102. The four module battery strings 101 may be replaced with three or less or five or more module battery strings 101.

As shown in FIG. 1, each of the module battery strings 101 includes 10 module batteries 121 (121a, 121b, ..., and 121c). The 10 module batteries 121 may be replaced with 9 or less or 11 or more module batteries 121.

As shown in FIG. 1, each of the module batteries 121 includes an assembled battery 131, a heater 132, and a blower fan 133.

The module battery strings 101a, 101b, 101c, and 101d are electrically connected in parallel. The module battery strings 101a, 101b, 101c, and 101d connected in parallel are electrically connected to the system 13 through the power conversion system (PCS) 122 and the transformer 102. In each of the module battery strings 101, the module batteries 121a, 121b, ..., and 121c are electrically connected in series.

The heater 132 belonging to each of the module batteries 121 converts heater power received from the control apparatus 12 into heat, and heats the interior of the module battery 121. Sodium-sulfur batteries 163, which will be described below, are thereby heated.

The blower fan 133 belonging to each of the module batteries 121 generates an air flow 141 using fan power received from the control apparatus 12. The generated air flow 141 transports heat from the interior of the module battery 121 to the exterior of the module battery 121 to cool the interior of the module battery 121. The sodium-sulfur batteries 163, which will be described below, are thereby cooled.

### 3 Assembled Battery

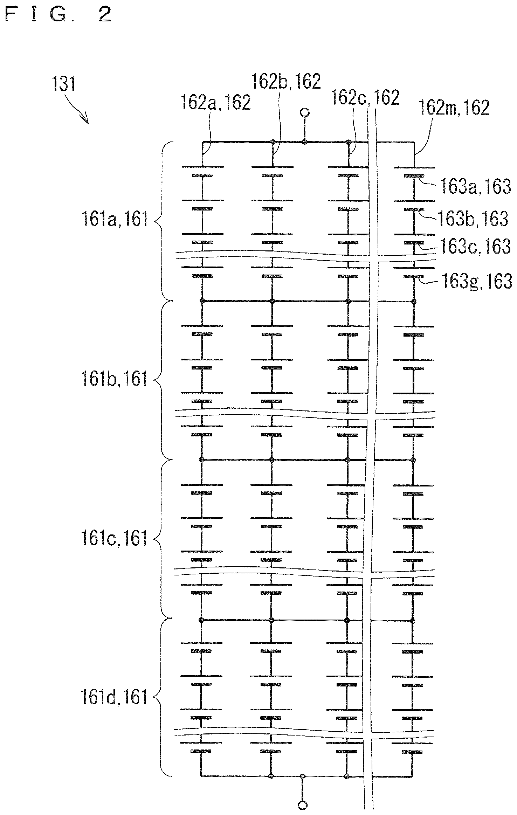

FIG. 2 is a circuit diagram schematically showing the assembled battery 131 of the power storage facility 1.

As shown in FIG. 2, the assembled battery 131 includes four blocks 161 (161a, 161b, 161c, and 161d). The four blocks 161 may be replaced with three or less or five or more blocks 161.

Each of the blocks 161 includes 12 strings 162 (162a, 162b, 162c, ..., and 162m). The 12 strings 162 may be replaced with 11 or less or 13 or more strings.

Each of the strings 162 includes eight cells 163 (163a, 163b, 163c, ..., and 163g). The eight cells 163 may be replaced with seven or less or nine or more cells.

The blocks 161a, 161b, 161c, and 161d are electrically connected in series. In each of the blocks 161, the strings 162a, 162b, 162c, ..., and 162m are electrically connected in parallel. In each of the strings 162, the cells 163a, 163b, 163c, ..., and 163g are electrically connected in series.

Discharge from the assembled battery 131 is caused by discharge from each of the cells 163. Charge to the assembled battery 131 is caused by charge to each of the cells 163.

Each of the cells 163 is a sodium-sulfur battery. The cells 163 are thus also referred to as the sodium-sulfur batteries 163 in the present embodiment.

### 4 Sodium-sulfur Battery

In each of the cells 163, a negative electrode active material is contained in a container. A positive electrode active material is contained in a gap between a solid electrolyte tube and a positive electrode container. The solid electrolyte tube is in contact with the negative electrode active material and the positive electrode active material, and separates the negative electrode active material and the positive electrode active material. Electrochemical reaction is thereby caused between the negative electrode active material and the positive electrode active material through the solid electrolyte tube to generate electromotive force.

The solid electrolyte tube is formed of a sodium-ion conductor, and is desired to be formed of ceramics of β-alumina. The negative electrode active material includes sodium. The positive electrode active material includes sulfur and sodium polysulfide.

### 5 Control Apparatus

As shown in FIG. 1, the control apparatus 12 includes a charge and discharge controller 151 and a temperature controller 152.

The charge and discharge controller 151 and the temperature controller 152 are configured by causing a computer to execute a program. The charge and discharge controller 151 and the temperature controller 152 may be configured by hardware.

The charge and discharge controller 151 controls charge and discharge of the sodium-sulfur batteries 163. The charge and discharge controller 151 transmits a control signal therefor to the power storage apparatus 11.

The temperature controller 152 controls the temperature of the sodium-sulfur batteries 163. The temperature controller 152 thus supplies the heater power and the fan power described above to the power storage apparatus 11.

The temperature controller 152 maintains the sodium-sulfur batteries 163 at a first temperature in an operation period during which the charge and discharge controller 151 causes the sodium-sulfur batteries 163 to be charged and discharged. The temperature controller 152 also maintains the sodium-sulfur batteries 163 at a second temperature in a non-operation period during which the charge and discharge controller 151 causes the sodium-sulfur batteries 163 not to be charged and discharged.

The first temperature is a temperature at which sodium as the negative electrode active material and sulfur and sodium polysulfide as the positive electrode active material are liquefied, and is desired to be 280 °C or more and 320 °C or less. The second temperature is a temperature at which sodium as the negative electrode active material and sulfur as the positive electrode active material are liquefied and sulfur polysulfide as the positive electrode active material is solidified, and is desired to be 140 °C or more and 160 °C or less.

According to control performed by the temperature controller 152, in the non-operation period during which the sodium-sulfur batteries 163 are not charged and discharged, sodium polysulfide activated at a high temperature to be highly corrosive is solidified while a liquefied state of sodium included in the negative electrode active material is maintained. Furthermore, by decreasing the temperature of the sodium-sulfur batteries 163 to the second temperature at which sodium polysulfide is solidified, activation of an active material at a high temperature is suppressed, and thus degeneration of a container, a sealer, and the like of the sodium-sulfur batteries 163 caused by the active material activated at the high temperature is suppressed. Deterioration of a component of the sodium-sulfur batteries 163 with which sodium and sodium polysulfide are in contact is thereby suppressed in the non-operation period. For example, deterioration of a glass joint, a thermo-compression joint, and the like with which sodium is in contact is suppressed, and deterioration of an anti-corrosive layer on an inner surface of a positive electrode container 1023, a bottom lid of the positive electrode container 1023, and the like with which sodium polysulfide is in contact is suppressed. As a result, deterioration of the sodium-sulfur batteries 163 is suppressed, so that the sodium-sulfur batteries 163 can be used for a longer period than an expected lifetime. When the sodium-sulfur batteries 163 expected to have a lifetime of 15 years are used while a non-operation period of 95 days is provided per year, for example, the sodium-sulfur batteries 163 can be used for 20 years, which is longer than 15 years as the lifetime.

According to control performed by the temperature controller 152, sodium and sulfur are not solidified in the non-operation period during which the sodium-sulfur batteries 163 are not to be charged and discharged. Application of large stress to a component of the sodium-sulfur batteries 163 at switching between the operation period and the non-operation period is thus suppressed.

The charge and discharge controller 151 is desired to cause the sodium-sulfur batteries 163 to reach the end of charge at transition from the operation period to the non-operation period. The sodium-sulfur batteries 163 can thus enter into the non-operation period with stress therein being balanced, so that deterioration of the sodium-sulfur batteries 163 can be suppressed.

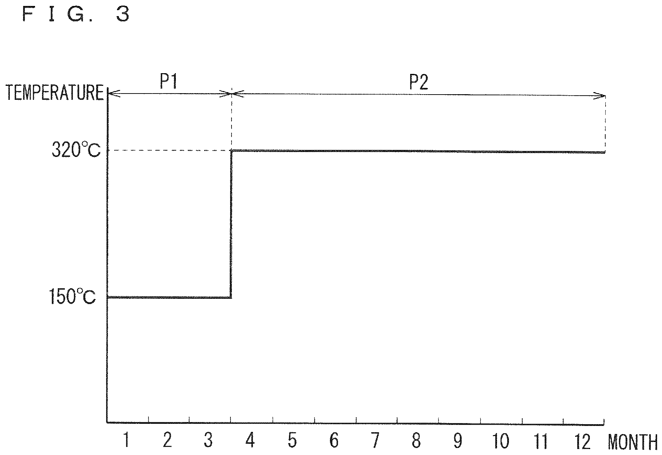

FIG. 3 is a graph showing an example of a change over time in temperature of the sodium-sulfur batteries 163 of the power storage facility 1 within a calendar year.

In an example shown in FIG. 3, the first temperature is 150 °C, and the second temperature is 320 °C.

In the example, a non-operation period P1 is January to March, and an operation period P2 is April to December. The non-operation period P1 and the operation period P2 are repeated annually.

That is to say, in the example, the non-operation period P1 is set only once without being divided within the calendar year. In this case, the temperature of the sodium-sulfur batteries 163 is not frequently switched between the first temperature and the second temperature, so that thermal stress applied to the sodium-sulfur batteries 163 is suppressed.

While the invention has been described in detail, the foregoing description is in all aspects illustrative and not restrictive. It is therefore understood that numerous unillustrated modifications can be devised without departing from the scope of the invention.

## Claims

1. An apparatus for controlling a sodium-sulfur battery, the sodium-sulfur battery including a negative electrode active material including sodium and a positive electrode active material including sulfur and sodium polysulfide, the apparatus comprising:
a charge and discharge controller to control charge and discharge of the sodium-sulfur battery; and
a temperature controller to control a temperature of the sodium-sulfur battery, wherein
the temperature controller maintains the sodium-sulfur battery at a first temperature in an operation period during which the charge and discharge controller causes the sodium-sulfur battery to be charged and discharged, and maintains the sodium-sulfur battery at a second temperature in a non-operation period during which the charge and discharge controller causes the sodium-sulfur battery not to be charged and discharged, the first temperature being a temperature at which sodium, sulfur, and sodium polysulfide are liquefied, the second temperature being a temperature at which sodium and sulfur are liquefied and sodium polysulfide is solidified.

2. The apparatus for controlling the sodium-sulfur battery according to claim 1, wherein
the first temperature is 280 °C or more and 320 °C or less, and
the second temperature is 140 °C or more and 160 °C or less.

3. The apparatus for controlling the sodium-sulfur battery according to claim 1 or 2, wherein
the charge and discharge controller causes the sodium-sulfur battery to reach the end of charge at transition from the operation period to the non-operation period.

4. A method for controlling a sodium-sulfur battery, the sodium-sulfur battery including a negative electrode active material including sodium and a positive electrode active material including sulfur and sodium polysulfide, the method comprising:
maintaining the sodium-sulfur battery at a first temperature at which sodium, sulfur, and sodium polysulfide are liquefied in an operation period during which the sodium-sulfur battery is charged and discharged; and
maintaining the sodium-sulfur battery at a second temperature at which sodium and sulfur are liquefied and sodium polysulfide is solidified in a non-operation period during which the sodium-sulfur battery is not charged and discharged.

5. The method for controlling the sodium-sulfur battery according to claim 4, wherein
the first temperature is 280 °C or more and 320 °C or less, and
the second temperature is 140 °C or more and 160 °C or less.

6. The method for controlling the sodium-sulfur battery according to claim 4 or 5, wherein
the sodium-sulfur battery is caused to reach the end of charge at transition from the operation period to the non-operation period.
